Europäisches Patentamt

European Patent Office

Office européen des brevets

(19)

(11) Veröffentlichungsnummer : **0 058 784**
**B1**

(12) **EUROPÄISCHE PATENTSCHRIFT**

(45) Veröffentlichungstag der Patentschrift :
03.04.85

(51) Int. Cl.⁴ : **C 25 B   1/00, C 25 B   1/04**

(21) Anmeldenummer : **81201366.2**

(22) Anmeldetag : **15.12.81**

(54) **Verfahren zur kontinuierlichen Herstellung von Stickoxyd (NO).**

(30) Priorität : **25.02.81 AT 872/81**

(43) Veröffentlichungstag der Anmeldung :
**01.09.82 Patentblatt 82/35**

(45) Bekanntmachung des Hinweises auf die Patenterteilung : **03.04.85 Patentblatt 85/14**

(84) Benannte Vertragsstaaten :
**CH DE FR GB LI**

(56) Entgegenhaltungen :
**EP-A- 0 023 813**
**DE-A- 1 928 300**
**DE-A- 2 105 643**
**SU-A-   364 563**
**W. Baukal, "Entwicklungsrichtungen in der Anwendung sauerstoffionenleitender Festelektrolyte, "Chemie-Ingenieur-Technik, Band 41, Nr. 14, 1969, S. 791-798**

(73) Patentinhaber : **BBC Aktiengesellschaft Brown, Boveri & Cie.**
**Haselstrasse**
**CH-5401 Baden (CH)**

(72) Erfinder : **Stucki, Samuel, Dr.**
**Dynamostrasse 1**
**CH-5400 Baden (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 058 784 B1

## Beschreibung

Die Erfindung geht aus von einem Verfahren zur Herstellung von Stickoxyd (NO) nach der Gattung des Anspruchs 1.

Salpetersäure dient heute als Ausgangsmaterial zur Herstellung zahlreicher chemischer Verbindungen. Darunter nimmt die Verarbeitung zu künstlichem Stickstoffdünger eine Vorrangstellung ein. Salpetersäure wird heute im grosstechnischen Massstab durch Verbrennen von Ammoniak mit Luftsauerstoff bei 800 °C über Platin/Rhodium-Kontakte hergestellt. Der Ammoniak seinerseits wird nach der bekannten Haber-Bosch-Synthese aus Luftstickstoff und Wasserstoff erzeugt.

Es ist indessen schon vorgeschlagen worden, die bei der stark exothermen Verbrennung des Ammoniaks anfallende Wärmemenge dadurch auszunutzen, dass die Reaktion in einer Hochtemperatur-Brennstoffzelle durchgeführt wird (Roger D. Farr and Costas G. Vayenas, Ammonia High Temperature Solid Electrolyte Fuel Cell, J. Electrochem. Soc., Juli 1980, S. 1478-1483 ; DE-A-1 928 300 ; EP-A-0 023 813). Dabei handelt es sich um Verfahren zur Herstellung sauerstoffhaltiger Stickstoffverbindungen (z. B. NO) in einer mit einem $ZrO_2$-Festelektrolyten und Ag-Elektroden ausgerüsteten elektrochemischen Hochtemperaturzelle, indem auf der Kathodenseite $O_2$ oder Luft, an der Anodenseite $NH_3$ zugeführt wird. Der Betrieb der Zelle erfolgt unter natürlichem Potentialgefälle als Brennstoffzelle (Gewinnung elektrischer Energie) oder als forcierte « Elektrolyse »-Zelle durch Anlagen einer äusseren Spannung (Verbrauch elektrischer Energie).

Es ist bekannt, Wasser bei hohen Temperaturen in Dampfform unter Verwendung von keramischen Feststoffelektrolyten elektrochemisch zu zerlegen. Dazu werden Zellen mit stabilisiertem Zirkonoxyd als Feststoffelektrolyt bei ca. 900 °C mit Wasserdampf beaufschlagt (Vergl. W. Baukal, Entwicklungsrichtungen in der Anwendung sauerstoffionen-leitender Festelektrolyte, Chemie-Ingenieur-Technik, Jahrg. 41, Nr. 14, 1969, Seiten 791-798). Weiter ist ein Verfahren zur Herstellung von Wasserstoff für die $NH_3$-Synthese durch $H_2O$-Dampfelektrolyse mit anodenseitiger Depolarisation durch Naturgas ($CH_4$) bekannt, wobei durch partielle Verbrennung vermutlich ein Gemisch von CO und $H_2$, ev. mit $CO_2$-Anteilen, sog. Konvertierungsgas erzeugt wird. Letzteres wird im Prozess weiter als Energieträger erzeugt. Letzteres wird im Prozess weiter als Energieträger benutzt. Bei 1 000 °C, 30 bar beträgt die Zellenspannung noch 0,01 V (Vergl. SU-A-364 563).

Nach dem oben erwähnten Verfahren von Farr et al stünde mindestens ein Teil der für die Verbrennungsreaktion von Ammoniak mit Sauerstoff charakteristischen freien Enthalpie $\Delta G$ als elektrische Energie an den klemmen der Zelle zur Verfügung.

Trotz der Möglichkeit der technischen Realisierbarkeit einer derartigen brennstoffzelle dürfte deren Wirtschaftlichkeit zufolge des bedeutenden Aufwandes zweifelhaft sein, weshalb ein Bedürfnis besteht, nach geeigneten Verfahren Ausschau zu halten.

Der Erfindung liegt die Aufgabe zugrunde, ein Verfahren zur kontinuierlichen Herstellung von Stickoxyd (NO) als Grundstoff für nachfolgende Salpetersäure- und Stickstoffdüngererzeugung anzugeben, welches unter möglichst weitgehender Herabsetzung des Energieaufwandes geschlossene Kreisläufe und eine optimale Ausnutzung der Anlage ermöglicht. Letztere soll in einen auch die Haber-Bosch-Synthese umfasseden Komplex integrierbar sein.

Diese Aufgabe wird erfindungsgemäss durch die Merkmale des Anspruchs 1 gelöst.

Die Erfindung wird anhand der nachfolgenden, durch Figuren erläuterten Ausführungsbeispiele beschrieben.

Dabei zeigt :

Figur 1   die chemisch-thermodynamischen Gleichgewichte der beteiligten Prozesse,

Figur 2   das Fliessbild (Blockdarstellung) des grundsätzlichen Aufbaus des Verfahrens,

Figur 3   den Ablauf der chemischen und elektrochemischen Prozesse unter Berücksichtigung der Stöchiometrie,

Figur 4   das Fliessbild einer möglichen Variante des Vezrfahrens integriert in einen Anlagenkomplex,

Figur 5   den grundsätzlichen Aufbau einer einzelnen Hochtemperatur-Elektrolysezelle,

Figur 6   den schematischen Aufbau einer aus mehreren Einzelzellen zusammengesetzten Elektrolysevorrichtung.

Der massgebende Leitgedanke der Erfindung besteht darin, den bei der Wasserstoffherstellung zur Ammoniaksynthese ablaufenden elektrolytischen Prozess — nämlich die Wasserelektrolyse — mit der Oxydation des Ammoniaks zu Stickoxyd unter Heranziehung des gleichzeitig anfallenden Sauerstoffs in einer einzigen gemeinsamen Apparatur zu verbinden.

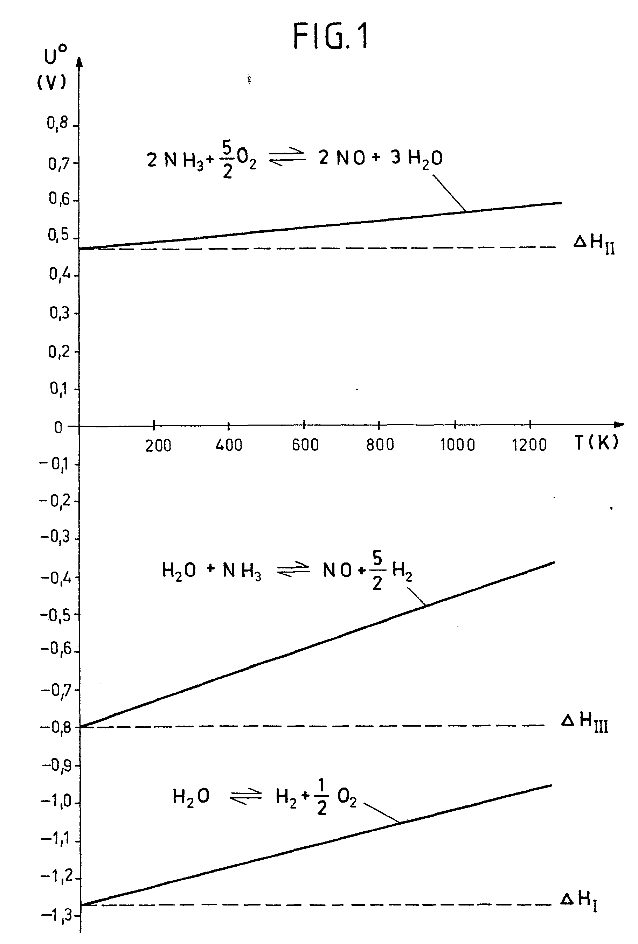

Fig. 1 zeigt eine graphische Darstellung der chemisch-thermodynamischen Gleichgewichtsverhältnisse der beteiligten Prozesse. Die Abszisse stellt die absolute Temperaturskala in Grad Kelvin, die Ordinate das der freien Enthalpie $\Delta G°$ entsprechende elektrochemische Potential U° (Standard-EMK) in Volt dar. Dabei gilt :

$$U° = - (\Delta G°)/(zF)$$

$z$ = Zahl der bei der Ionenumladung ausgetauschten Ladungen
$F$ = Faraday-Konstante
Die unterste Gerade entspricht den Vorgängen bei der Wasserelektrolyse :

$$H_2O \rightleftharpoons H_2 + (1/2) O_2$$

Die theoretische Zersetzungsspannung (Ruhespannung) beträgt am absoluten Nullpunkt knapp − 1,3 V, was chemisch-thermodynamisch der Enthalpie $\Delta H_I$, dargestellt durch eine gestrichelte Horizontale entspricht. Bei einer Temperatur von 1 073 K (800 °C) beträgt das Potential noch ca. − 1,0 V.

Die oberste Gerade entspricht den Vorgängen bei der Ammoniakoxydation, so wie sie beispielsweise in einer Brennstoffzelle (Umkehrung der Elektrolyse) durchgeführt werden kann :

$$2 NH_3 + (5/2) O_2 \rightleftharpoons 2 NO + 3 H_2O$$

Die Ruhespannung am absoluten Nullpunkt beträgt hier knapp + 0,5 V (Enthalpie $\Delta H_{II}$) und steigt mit der Temperatur nur sehr wenig an.

Die mittlere Gerade ergibt sich aus der erfindungsgemässen Kombination der vorgenannten Prozesse, welche als depolarisierte Elektrolyse aufgefasst werden kann :

$$H_2O + NH_3 \rightleftharpoons NO + (5/2) H_2$$

Dabei wirkt der auf der Anodenseite zugeführte Ammoniak als Depolarisator für den dort anfallenden Sauerstoff. Eine derartige Zelle weist am absoluten Nullpunkt noch eine Ruhespannung von ca. − 0,8 V (Enthalpie $\Delta H_{III}$), bei einer Temperatur von 1 073 K noch knapp − 0,5 V auf. Man gewinnt also gegenüber der reinen Wasserelektrolyse durchschnittlich ca. 0,5 V und erhält direkt das für die Salpetersäuregewinnung gewünschte Stickoxyd (NO).

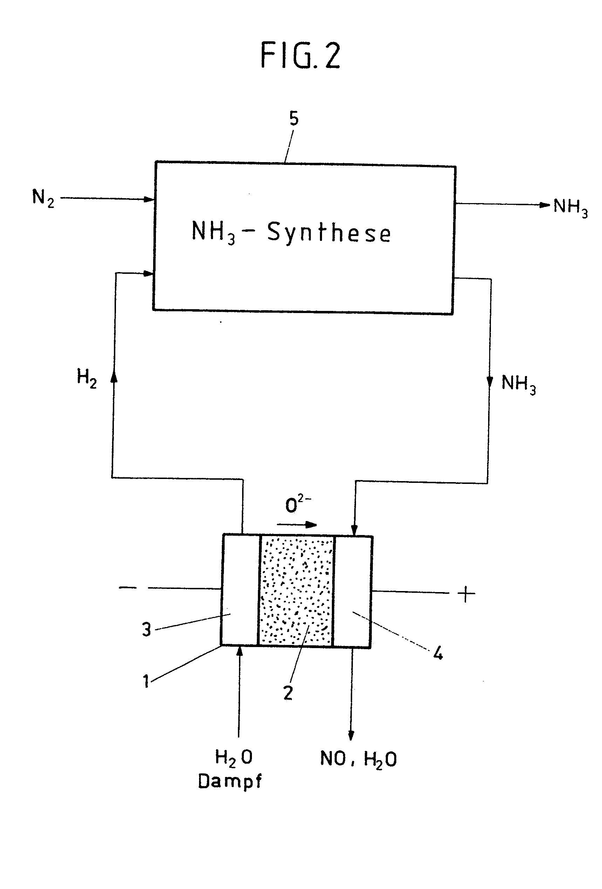

In Fig. 2 ist das Fliessbild des grundsätzlichen Aufbaus des Verfahrens in Blockdarstellung abgebildet. 1 ist eine Hochtemperatur-Elektrolysezelle, welche auf Temperaturen von 800 bis 1 000 °C gehalten wird. 2 stellt einen für den Sauerstoffionentransport geeigneten Hochtemperatur-Feststoffelektrolyten dar. Die Wanderung der Sauerstoffionen ist durch das mit Pfeil behaftete Symbol $O^{2-}$ dargestellt. 3 ist eine poröse Kathode, 4 eine poröse Anode. Erstere wird mit $H_2O$-Dampf, letztere mit $NH_3$ beaufschlagt. Das an der Kathode 3 gebildete $H_2$ wird in einer konventionellen $NH_3$-Syntheseapparatur 5 nach dem Haber-Bosch-Verfahren mit $N_2$ (Luftstickstoff) zu $NH_3$ umgesetzt. Wird alles von der Elektrolysezelle 1 stammende $H_2$ in 5 umgesetzt, so entsteht ein Ueberschuss an $NH_3$, welcher zu weiteren Zwecken gebraucht werden kann. An der Anode 4 entstehen NO (Stickoxyd) und $H_2O$.

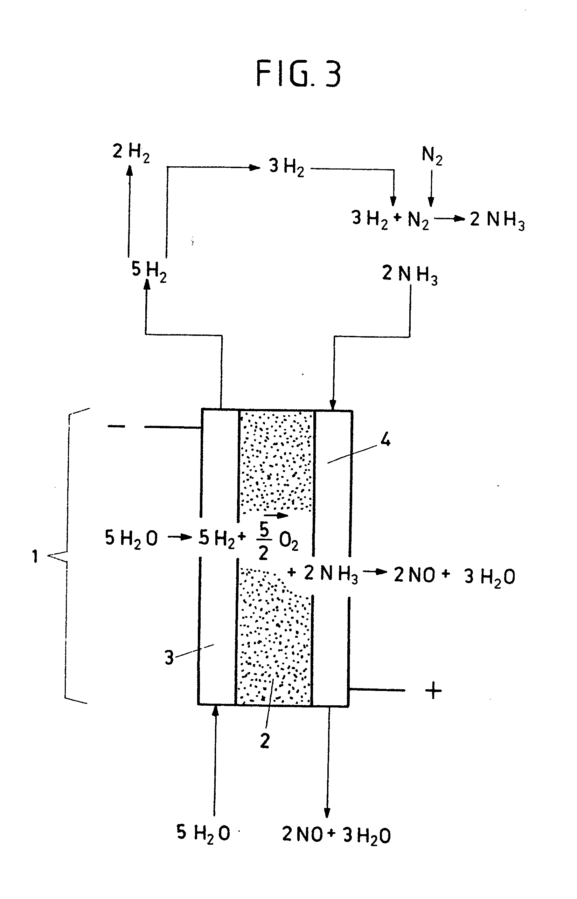

Fig. 3 zeigt den Ablauf der chemischen und elektrochemischen Prozesse, vornehmlich in der Elektrolysezelle 1, unter Berücksichtigung der stöchiometrischen Verhältnisse. Die Bezugszeichen entsprechen denjenigen der Fig. 2. Auf der Kathodenseite spielt sich vornehmlich der Elektrolyseprozess

$$5 H_2O \rightarrow 5 H_2 + (5/2) O_2$$

ab, während auf der Anodenseite der zugeführte Ammoniak oxydiert wird :

$$(5/2) O_2 + 2 NH_3 \rightarrow 2 NO + 3 H_2O$$

Normalerweise, vollständigen Stoffumsatz vorausgesetzt, werden also 5 Mol $H_2O$-Dampf und 1 Mol $N_2$ (Luftstickstoff) als Ausgangsstoffe gebraucht. Von den als Zwischenprodukt entstehenden 5 Mol $H_2$ werden 3 Mol zur $NH_3$-Synthese gebraucht. Von letzterem entstehen 2 Mol, welche sich mit 5/2 Mol $O_2$ in der kombinierten Zelle zu 2 Mol NO und 3 Mol $H_2O$ umsetzen. Die überschüssigen 2 Mol $H_2$ können für weitere Zwecke, vornehmlich zur zusätzlichen $NH_3$-Gewinnung oder sonstwie verwendet werden.

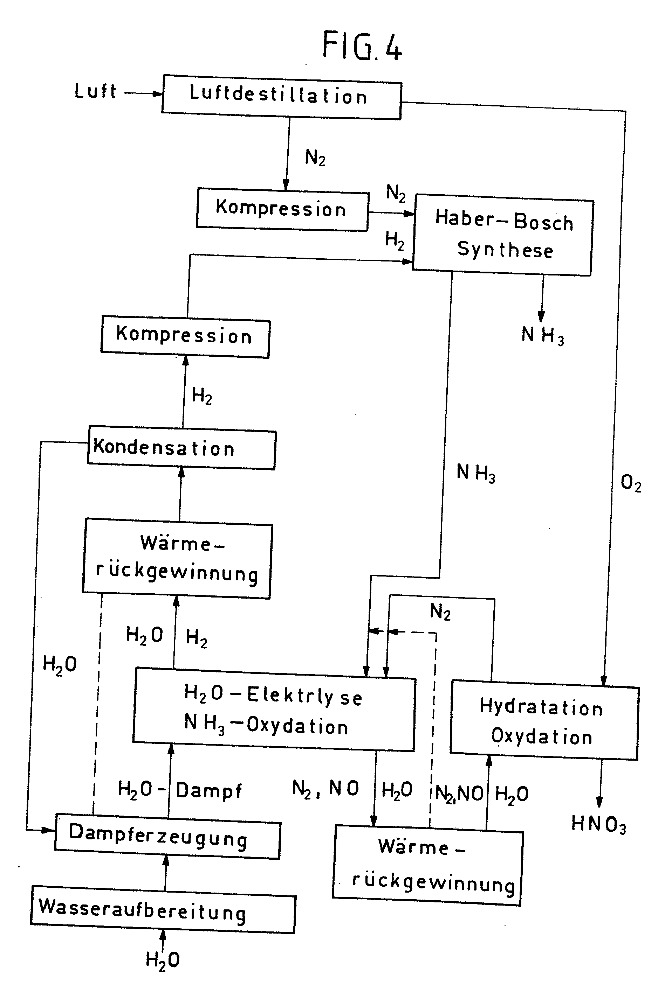

Fig. 4 zeigt das Fliessbild einer möglichen Ausführungsvariante des Verfahrens, wobei dieses in einen vollständigen Anlagenkomplex zur Gewinnung von Salpetersäure integriert ist. Als Ausgangsstoffe dienen Luft und Wasser, als Endprodukte werden $HNO_3$ und $NH_3$ gewonnen. Das Wasser wird zunächst in einer Wasseraufbereitungsanlage von allen flüssigen, gasförmigen und festen gelösten und suspendierten schädlichen Stoffen befreit und gelangt hierauf in den Dampferzeuger und Ueberhitzer. Der überhitzte $H_2O$-Dampf gelangt in eine Batterie von Hochtemperatur-Elektrolysezellen. Das entstehende Gemisch von $H_2$ und Ueberschuss-$H_2O$-Dampf wird in einem Wärmeaustauscher zu Wärmerückgewinnung herangezogen, welche z. B. bei der Dampferzeugung wieder verwertet werden kann. Dies ist in der Figur durch eine gestrichelte Linie angedeutet. Nach weiterer Abkühlung durchläuft das Gemisch die Kondensationsstufe in welcher das Wasser ausgeschieden und in den Dampferzeuger zurückgeführt wird. Nach erfolgter Kompression wird das $H_2$ der Haber-Bosch-Synthese zugeführt. Die Luft wird zunächst in einer Luftdestillationsanlage (z. B. nach Linde-Fränkl oder Claude) in $N_2$ und $O_2$ zerlegt und ersteres nach Durchlaufen einer Kompressionsstufe zur Haber-Bosch-Synthese verwendet. Das entstehende $NH_3$ wird der Anodenseite der Hochtemperaturzelle zusammen mit $N_2$ als Umlaufgas zugeleitet. Das auf der Austrittseite anfallende Gasgemisch, bestehend aus NO, $N_2$ und $H_2O$ wird in einem

Wärmeaustauscher zwecks Wärmerückgewinnung abgekühlt. Die Wärme kann z. B. zur Vorwärmung des Gemisches von $NH_3$ und $N_2$ auf der Eintrittseite herangezogen werden, wie durch eine gestrichelte Linie angedeutet ist. Die letzte Stufe stellt die Hydratation und Oxydation dar. Dabei wird das von der Luftdestillation kommende $O_2$ mit dem von der Elektrolysezelle stammenden, aus NO, $N_2$ und $H_2O$ bestehenden Gasgemisch zur Reaktion gebracht. Das Endprodukt ist $HNO_3$, welches z. B. zur Kunstdüngererzeugung verwendet werden kann. In der nach Fig. 4 arbeitenden Anlage wird ausserdem ein Ueberschuss an $NH_3$ produziert, welches verschiedenen Zwecken zugeführt werden kann.

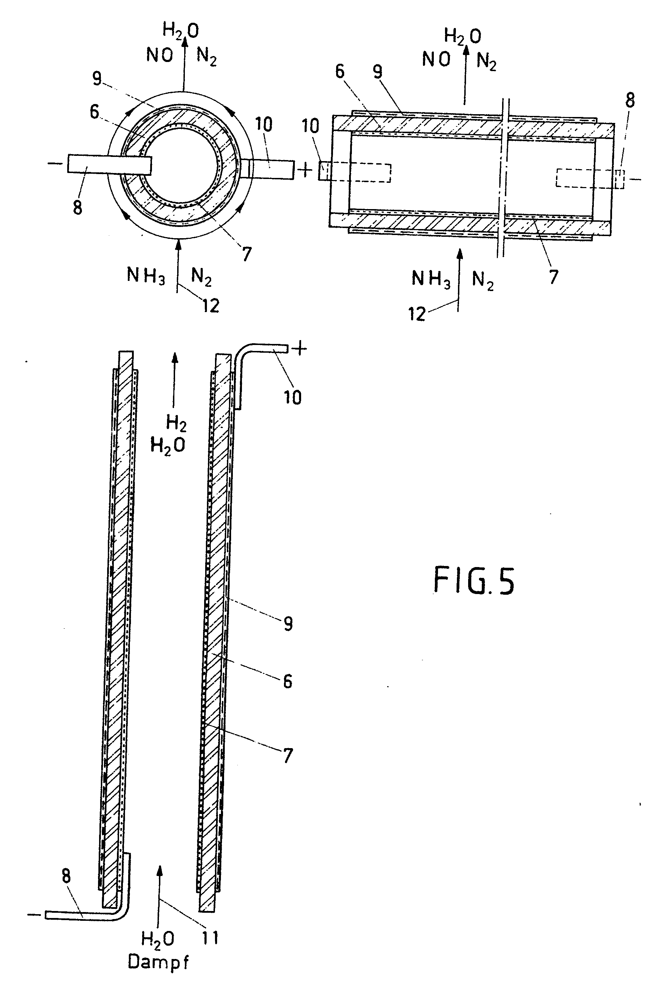

Fig. 5 stellt den grundsätzlichen Aufbau einer einzelnen Hochtemperatur-Elektrolysezelle in 3 Rissen bzw. Schnitten dar. 6 ist ein als Feststoffelektrolyt (Hochtemperatur-Ionenleiter) wirkendes Keramikrohr (z. B. $ZrO_2$, durch Yttrium stabilisiert), welches an seiner Oberfläche eine innere poröse elektronenleitende Schicht 7 (z. B. Platin) als Kathode und eine äussere poröse elektronenleitende Schicht 9 (z. B. Platin) als Anode aufweist. Die poröse Schicht 7 ist mit einer negativen Anschlussklemme 8, die poröse Schicht 9 mit einer positiven Anschlussklemme 10 mechanisch und galvanisch fest verbunden. Die Schichten 7 und 9 reichen nicht bis zu den Stirnseiten des Keramikrohres 6, um die Gefahr von Nebenschlüssen und Kurzschlüssen auszuschalten. Das Keramikrohr 6 wird innen (Kathodenseite, $H_2$-Seite) von einem $H_2O$-Dampfstrom 11 axial dsurchflutet, während es gleichzeitig aussen (Anodenseite, $O_2$-Seite) von einem $NH_3/N_2$-Gasstrom 12 quer angeströmt wird (Kreuzstromprinzip). Auf der inneren Austrittseite verlässt ein $H_2/H_2O$-Gemisch das Keramikrohr 6 axial, während sich auf der Aussenseite am hinteren Staupunkt ein $NO/N_2/H_2O$-Gemisch vom Rohr ablöst. Sämtliche Strömungsrichtungen sind durch Pfeile markiert.

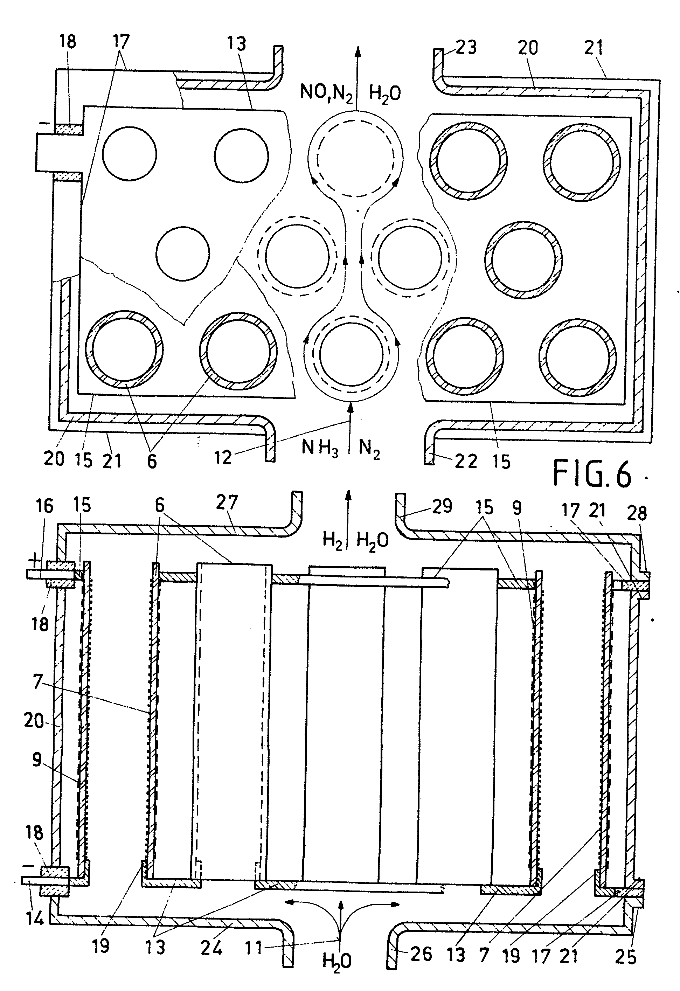

In Fig. 6 ist der schematische Aufbau einer aus mehreren Einzelzellen zusammengesetzten Elektrolysevorrichtung im Aufriss (Querschnitt) und Grundriss (Längsschnitt) dargestellt. Die Bezugszeichen 6, 7 und 9 entsprechen denjenigen in Fig. 5. Es handelt sich bei dieser Apparatur um ein aus mehreren parallel angeordneten Keramikrohren 6 bestehendes Rohrbündel, dessen einzelne Rohre 6 innen parallel durchflutet und aussen parallel umströmt werden. Die durch Pfeile angedeuteten Gasströme 11 und 12 entsprechen ebenfalls denjenigen in Fig. 5. Die parallel verlaufenden Keramikrohre 6 werden durch je eine stirnseitig angeordnete negative bzw. positive unipolare Platte (13, 15) zusammengehalten. Die negative Platte 13 besitzt Rohrstummel (Nippel) 19, welche innen in die Keramikhrohre 6 eingreifen und den elektrischen Kontakt mit der als Kathode dienenden inneren porösen Schicht 7 herstellen. Die positive Platte 15 weist Löcher auf, in welche die Keramikrohre 6 eingelassen sind, derart, dass der Kontakt zur äusseren porösen Schicht 9 gewährleistet ist. Beide Platten besitzen je einen als Klemme (14, 16) dienenden Fortsatz, welcher je in einem Durchführungsisolator 18 gehalten ist. Der Gasstrom 12 wird in einem äusseren Gefäss 20 geführt, welches mit Flanschen 21 versehen ist und an der Eintritt- sowie an der Austrittseite je einen Roranschluss 22 bzw. 23 besitzt. Der Raum des Gasstromes 12 wird ferner stirnseitig durch die isolierenden Trennwände 17 begrenzt, welche in den gleichen Ebenen wie die unipolaren Platten 13 bzw. 15 liegen.

Der Gasstrom 11 wird auf seiner Eintrittseite durch einen mit einem Rohranschluss 26 versehenen Deckel 24 geführt, welcher den Raum auf der Stirnseite des Rohrbündels begrenzt. Analog befindet sich auf der Austrittseite ein Deckel 27 mit einem Rohranschluss 29 zu Sammlung und Weiterleitung des $H_2/H_2O$-Gasstromes. Die Deckel 24 und 27 sind je mit Flanschen 25 und 28 versehen, welche unter Zwischenschaltung der isolierenden Trennwände 17 mit den Flanschen 21 des äusseren Gefässes 20 verbunden sind.

## Ausführungsbeispiel

Siehe Figuren 4 und 5.

Als Hochtemperatur-Elektrolysezelle wurde ein Keramikrohr 6 aus Zirkonoxyd verwendet, welches mit 8 % Yttriumoxyd stabilisiert war. Das Rohr 6 wies eine Länge von 200 mm und einen Aussendurchmesser von 20 mm, bei einer Wanddicke von 1,5 mm auf. Die axiale Länge der als Kathode und Anode dienenden porösen Schichten 7 und 9 (aus Pt) betrug 160 mm. Die Dicke der Schichten betrug 3 μ. Die Fläche der äusseren Schicht 9 (Anode) war 100 $cm^2$. Die Zelle wurde in einem Ofen auf 1 000 °C aufgeheizt und auf dieser Temperatur gehalten. Dann wurde Wasserdampf von gleicher Temperatur unter einem Druck von 0,1 MPa in einer Menge von 3,5 l/min durch das Keramikrohr 6 geleitet, was einer mittleren Strömungsgeschwindigkeit von 18,6 cm/sec entsprach. Die Klemmen 8 und 10 wurden an eine Gleichstromquelle angeschlossen und die Zelle wurde mit einem Strom von 50 A belastet, was eine anodenseitige Stromdichte von 0,5 $A/cm^2$ bedeutete. Die Spannung zwischen den Elektroden betrug dabei 1,25 V. Dies entsprach der Zersetzungsspannung für die reine Wasserdampfelektrolyse, wobei an der äusseren porösen Schicht 9 (Anode) Sauerstoff entwickelt wurde. Nun wurde ein aus Ammoniak und Stickstoff bestehendes Gemisch derart der Elektrolysezelle zugeführt, dass das Keramikrohr 6 aussen quer umströmt wurde (Kreuzstromprinzip), wobei der Gasstrom mit der äusseren porösen Schicht 9 in innigen Kontakt gebracht wurde. In der vorliegenden Anordnung betrug das Verhältnis von $NH_3$ zu $N_2$ gleich 10 : 90 Vol.-%. Die totale Gasmenge pro Zeiteinheit betrug 4 l/min, was einer maximalen tangentialen Strömungsgeschwindigkeit am Keramikrohr 6 von 5 cm/sec entsprach. Durch das Kreuzstromprinzip und die optimale Strömungsgeschwindigkeit am Keramikrohr 6 wird dafür gesorgt, dass die

Verweilzeit der $NH_3$-Moleküle an der porösen Schicht 9 nur kurz ist und grössenordnungsmässig nur etwa 1 ms beträgt. Auf diese Weise wird die gemäss nachstehender Reaktion verlaufende schädliche Bildung von Stickstoff und Wasserdampf am katalytisch wirkenden Platin weitgehend unterdrückt :

$$4\,NH_3 + 6\,NO \rightleftharpoons 5\,N_2 + 6\,H_2O$$

Durch einen Ueberschuss an $N_2$ im Gasstrom 12 wird ferner das Gleichgewicht nach links verschoben und der schädliche Verlust an NO herabgedrückt. Ausserdem wird durch das Beimischen von $N_2$ die Gesamtausbeute an NO erhöht. Durch das Zuleiten des $NH_3/N_2$-Gasstromes 12 an der Aussenseite des Keramikrohres 6 sank die Zellenspannung von ursprünglich 1,25 V (Wasserelektrolyse) auf 0,75 V (depolarisierte Elektrolyse). Die Reduktion der Zellenspannung von 0,5 V bedeutet also eine namhafte Energieersparnis von 40 % gegenüber der reinen Wasserelektrolyse. Die Analyse der Gase an der Austrittseite ergab folgendes Bild :

Kathodenseite (innen) : $H_2O$-Dampf : 90 % (Ueberschuss)

$H_2$ : 10 %

Anodenseite (aussen) : NO : 8 % (95 % der stöchiometrischen Menge)

$N_2$ : 79 %

$H_2O$ : 13 %

Die Erfindung ist nicht auf die in den Figuren dargestellten und im Ausführungsbeispiel beschriebenen Einzelheiten begrenzt. Prinzipiell können auch andere Hochtemperatur-Feststoffelektrolyte als $ZrO_2$ für das Keramikrohr 6 zur Anwendung kommen. Ferner ist man für die innere (7) sowie die äussere poröse Schicht 9, welche je als Kathode, bzw. Anode wirken, nicht auf die Verwendung von Platin beschränkt. Es können z. B. auch andere Platinmetalle wie Palladium oder Mischungen von verschiedenen Platinmetallen bzw. deren Oxyden Verwendung finden. Ausserdem kommen auch alle möglichen Verbundwerkstoffe, z. B. Mischungen von Erdalkali,- seltene Erdmetall- und weiteren Oxyden allein oder in Verbindung mit Edelmetallen und deren Legierungen in Frage.

Die Einzelzelle kann grundsätzlich auch andere als die im Ausführungsbeispiel angegebenen Dimensionen aufweisen. Man wird danach trachten, Abmessungen und Strömungsgeschwindigkeiten der beteiligten Gasgemische aufeinander abzustimmen und zu optimieren. Um den ohmschen Spannungsabfall der Zelle klein zu halten, wird man versuchen, die Wandstärke des Keramikrohres 6 möglichst klein und seine Oberfläche möglichst gross zu machen. Natürlich sind hier geometrischkonstruktive und festigkeitstechnische Grenzen gesetzt.

Das Verfahren kann auch unter erhöhtem Druck, vorteilhafterweise bis 1 MPa durchgeführt werden.

**Ansprüche**

1. Verfahren zur kontinuierlichen Herstellung von Stickoxyd (NO) als Ausgangsstoff zur Salpetersäuregewinnung unter Einbeziehung der Haber-Bosch-Ammoniaksynthese (5), wobei als primäre Ausgangsstoffe Wasser und Luft verwendet werden, indem das Wasser verdampft, überhitzt und in einer Hochtemperatur-Elektrolysezelle (1) einem Elektrolyseprozess unterworfen wird und der dabei entstehende Wasserstoff in an sich bekannter Weise nach dem Haber-Bosch-Verfahren (5) mit Luftstickstoff zu Ammoniak umgesetzt wird und dass letzterer mit dem aus der Wasserelektrolyse anfallenden naszierenden Sauerstoff in der nämlichen Elektrolysezelle (1) unter Ausnutzung des elektrochemischen Potentials zu Stickoxyd und Wasserdampf oxydiert wird, dadurch gekennzeichnet, dass dem Ammoniak am Eintritt in die Elektrolysezelle (1) bis zum 9-fachen Volumen Stickstoff als Umlaufgas beigemischt wird und dass die Elektrolysezelle (1) durch Vorwärmung der gasförmigen Arbeitsmittel auf einer Temperatur von mindestens 800 °C gehalten sowie durch Anlegen einer Spannung von 0,75 V mit einer Stromdichte von 0,5 A/cm² beaufschlagt wird.

2. Verfahren nach Anspruch 1, dadurch gekennzeichnet, dass in einer Batterie parallel geschalteter Hochtemperatur-Elektrolysezellen (1) jeweils in der einzelnen aus einem Keramikrohr (6) bestehenden Elektrolysezelle (1) in ihrem Inneren in ihrer Längsrichtung ein Wasserdampfstrom (11) entlanggeführt wird, und dass quer zu ihrer äusseren Oberfläche ein aus einer Mischung von Ammoniak und Stickstoff bestehender Gasstrom (12) in einem äusseren Gefäss (20) geführt wird, wobei die innere und äussere Oberfläche des Keramikrohrs mit je einer leitenden porösen Schicht (7, 9) versehen ist, indem die innere Schicht (7) als Kathode, die äussere (9) als Anode verwendet wird, und dass auf der einen Stirnseite des Keramikrohres eine positive (10, 16) und auf der anderen eine negative Anschlussklemme verwendet wird, und dass ferner mehrere Elektrolysezellen (1) in Form eines auf jeder Stirnseite durch eine der Stromzuführung dienende gelochte unipolare Platte (13, 15) begrenzten Rohrbündels verwendet werden.

3. Verfahren nach Anspruch 2, dadurch gekennzeichnet, dass als Keramikrohr (6) ein aus mit Yttrium stabilisiertem Zirkonoxyd bestehendes und poröse, ein Platinmetall und/oder ein Platinmetalloxyd enthaltende Schichten (7, 9) aufweisendes Rohr verwendet wird.

4. Verfahren nach Anspruch 3, dadurch gekennzeichnet, dass für die porösen Schichten (7, 9) Platin verwendet wird.

**0 058 784**

## Claims

1. Process for the continuous production of nitric oxide (NO) as starting material for the manufacture of nitric acid, integrated with the Haber-Bosch ammonia synthesis (5), the primary raw materials used being water and air, by vaporising the water, superheating the vapour and subjecting it to an electrolysis process in a high-temperatur electrolytic cell (1) and reacting the resulting hydrogen in the manner known per se according to the Haber-Bosch process (5) with atmospheric nitrogen to give ammonia and oxidising the latter with the nascent oxygen, being formed in the water electrolysis, in the same electrolytic cell (1)) with utilisation of the electrochemical potential, to give nitric oxide and water vapour, characterised in that the ammonia is mixed at the inlet into the electrolytic cell (1) with up to 9 times the volume of nitrogen as a circulating gas, and that the electrolytic cell (1) is maintained at a temperature of at least 800 °C by preheating the gaseous working media and is subjected to a current density of 0.5 A/cm$^2$ by applying a voltage of 0.75 V.

2. Process according to Claim 1, characterised in that, in a battery of high-temperature electrolytic cells (1) connected in parallel, a water vapour stream (11) is passed along in the interior of each individual electrolytic cell (1), consisting of a ceramic tube (6), and that, transversely to its external surface, a gas stream (12), consisting of a mixture of ammonia and nitrogen, is passed through in an outer vessel (20), the inner and outer surfaces of the ceramic tube being each provided with a conductive porous layer (7, 9), the inner layer (7) being used as the cathode and the outer layer (9) being used as the anode, and that a positive terminal (10, 16) is used on one end face of the ceramic tube and a negative terminal is used on the other, and that, moreover, several electrolytic cells (1) are used in the form of a tube bundle bounded on each end face by a perforated unipolar plate (13, 15) serving for the supply of current.

3. Process according to Claim 2, characterised in that the ceramic tube (6) used is a tube consisting of zirconium oxide stabilised with yttrium and having porous layers (7, 9) which contain a platinum metal and/or a platinum metal oxide.

4. Process according to Claim 3, characterised in that platinum is used for the porous layers (7, 9).

## Revendications

1. Procédé de production continue d'oxyde d'azote (NO) comme matière première pour la fabrication de l'acide nitrique par mise en œuvre de la synthèse de l'ammoniac suivant Haber-Bosch (5) pour laquelle l'eau et l'air sont utilisés comme matières premières essentielles, suivant lequel l'eau est vaporisée, surchauffée et soumise à un processus d'électrolyse dans une cellule d'électrolyse à haute température (1) et l'hydrogène ainsi formé est converti, de façon connue suivant le procédé Haber-Bosch (5) au moyen d'azote atmosphérique en ammoniac, puis celui-ci est oxydé en oxyde d'azote et vapeur d'eau à l'aide de l'oxygène naissant formé par l'électrolyse de l'eau dans ladite cellule d'électrolyse (1) par mise à profit du potentiel électrochimique, caractérisé en ce que l'ammoniac est additionné à l'entrée de la cellule d'électrolyse (1) d'un volume jusqu'à 9 fois supérieur d'azote comme gaz de circulation et la cellule d'électrolyse (1) est maintenue à une température d'au moins 800 °C par préchauffage du milieu de travail gazeux et est alimentée sous une densité de courant de 0,5 A/cm$^2$ par entretien d'une tension de 0,75 V.

2. Procédé suivant la revendication 1, caractérisé en ce que dans une batterie de cellules d'électrolyse à température élevée (1) disposées en parallèle, chacune des cellules d'électrolyse (1) consistant en un tube en céramique (6) est parcourue intérieurement dans le sens longitudinal par un courant de vapeur d'eau (11) tandis qu'un mélange gazeux (12) consistant en ammoniac et en azote est amené transversalement à leur surface extérieure dans un récipient extérieur (20), étant entendu que la surface intérieure et la surface extérieure du tube en céramique sont munies chacune d'une couche poreuse conductrice (7, 9) et que la couche intérieure (7) sert de cathode et la couche extérieure (9) sert d'anode, une borne de raccordement positive (10, 16) est agencée à une des extrémités du tube en céramique et une borne négative à l'autre et en outre plusieurs cellules d'électrolyse (1) sont utilisées sous la forme d'un faisceau de tubes délimité à chaque extrémité d'about par une plaque unipolaire perforée (13, 15) servant à conduire le courant gazeux.

3. Procédé suivant la revendication 2, caractérisé en ce qu'on utilise comme tube en céramique (6) un tube consistant en oxyde de zirconium stabilisé à l'yttrium et des couches poreuses (7, 9) contenant un métal de la mine du platine et/ou un oxyde de métal de la mine du platine.

4. Procédé suivant la revendication 3, caractérisé en ce qu'on utilise le platine pour les couches poreuses (7, 9).

# FIG.1

# FIG.2

# FIG. 3

$2H_2$

$3H_2$ $\longrightarrow$ $N_2$

$3H_2 + N_2 \longrightarrow 2NH_3$

$5H_2$ $2NH_3$

$5H_2O \longrightarrow 5H_2 + \dfrac{5}{2}O_2$

$+ 2NH_3 \longrightarrow 2NO + 3H_2O$

4

1

3

2

$5H_2O$ $2NO + 3H_2O$

# FIG.4

Luft → | Luftdestillation |

| Luftdestillation | → $N_2$ → | Kompression | → $N_2$ → | Haber−Bosch Synthese |

| Kompression | → $N_2$

$H_2$ → | Haber−Bosch Synthese | → $NH_3$

| Kompression |

↑ $H_2$

| Kondensation |

↑

| Wärme− rückgewinnung |

$H_2O$ $H_2$

| $H_2O$−Elektrlyse $NH_3$−Oxydation |

$N_2$

$NH_3$

$O_2$

| Hydratation Oxydation | → $HNO_3$

$H_2O$−Dampf

$N_2$, $NO$ $H_2O$ $N_2$,$NO$ $H_2O$

| Dampferzeugung |

| Wärme− rückgewinnung |

↑

| Wasseraufbereitung |

↑ $H_2O$

FIG.5

FIG.6